# EUROPEAN PATENT SPECIFICATION

(11) **EP 2 290 995 B1**
(45) Date of publication and mention of the grant of the patent: **12.12.2012**
(21) Application number: 10162045.8
(22) Date of filing: 05.05.2010
(51) Int. Cl.: H04N 13/04

(54) **Display apparatus and driving method thereof for 3D displays with shutter glasses**
Anzeigevorrichtung und Verfahren zu ihrer Ansteuerung für 3D Bildschirme mit Shutterbrillen
Appareil d'affichage et son procédé de commande pour écrans 3D avec des lunettes à obturation

(30) Priority: 01.09.2009 KR 20090082146
(43) Date of publication of application: 02.03.2011
(73) Proprietor: Samsung Electronics Co., Ltd., Suwon-si, Gyeonggi-do, 443-742 (KR)
(72) Inventor: Seong, Ki-bum, Gyeonggi-do (KR); Park, Jung-jin, Gyeonggi-do (KR); Choi, Nak-won, Incheon (KR); Yun, Sang-un, Seoul (KR); Sung, Jun-ho, Seoul (KR)
(74) Representative: Walaski, Jan Filip

(56) References cited:
- WO-A1-2007/024313
- JP-A- 2000 284 224
- US-A1- 2007 229 395
- US-A1- 2008 303 963

## Description

The present invention relates to a display apparatus and a driving method thereof, and a display apparatus, which can provide a clear image by preventing the brightness of a stereoscopic image from lowering, and a driving method thereof.

US2008/0303963 describes a liquid crystal display and a pair of liquid crystal shutter glasses. A liquid crystal panel ultimately displays a left and right image formed in a predetermined scanning direction.

WO2007/024313 describes equipment through the synchronization of stereoscopic projection displays, in which a project projects alternate left and right stereoscopic images. The image from the projector is blanked or dark during the transition times of the lenses in the glasses.

A three-dimensional (3D) stereoscopic image displayed on a display apparatus such as a television (TV) or the like is generally based on binocular parallax that has the largest effect on giving a stereoscopic view at a short distance. Here, the 3D image can be seen through shutter-type 3D glasses, in which the left-eye image and the right-eye image are quickly alternated on a screen, and the shutter-type 3D glasses are opened and closed in sync with the left-eye image and the right-eye image to thereby achieve the 3D image. Specifically, the 3D glasses have an opened left-shutter and a closed right-shutter while the screen shows the left-eye image, but have the closed left-shutter and the opened right-shutter while the screen shows displays the right-eye image. Such shutter-type 3D glasses receive a synchronous signal in the form of an infrared (IR) signal.

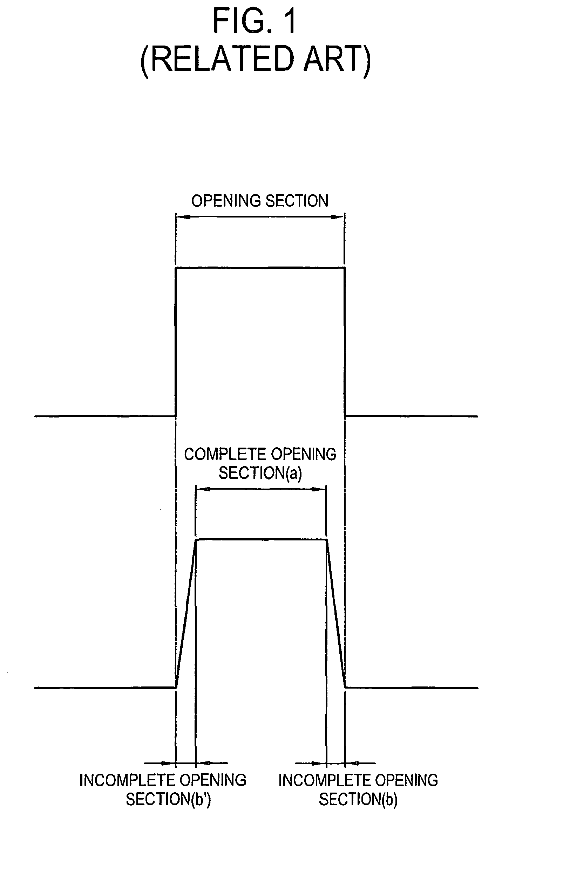

Meanwhile, if the shutter-type 3D glasses employ liquid crystal, there is needed a response time that the liquid crystal operates in response to the synchronous signal. FIG. 1 shows a response time of the shutter-type 3D glasses using the liquid crystal. As shown in FIG. 1, an opening section of the left-eye shutter or the right-eye shutter includes an incomplete opening section b, b' involving the response time, and a complete opening section a. A user can see the 3D image displayed on the screen during the opening sections a, b, b'. During the complete opening section a, a clear 3D image can be seen. However, during the incomplete opening sections b, b', the left-eye shutter or the right-eye shutter is being opened or closed, and therefore the brightness of the 3D image is lowered.

Accordingly, an exemplary aspect provides a display apparatus and a driving method thereof, in which a data scanning time or a backlight scanning time is shortened to prevent the brightness of a 3D image from lowering during an incomplete opening period, thereby providing a clear stereoscopic image.

The present invention provides, in a first aspect, a display apparatus according to claim1. The present invention provides in a second aspect, a driving method according to claim 8.

The margin period may be generated by fixing a beginning point of the scan section and advancing a finishing point of the scan section.

The controller may control the backlight unit to sequentially scan a partial area of a screen in a scanning direction.

The display unit may include a liquid crystal display (LCD) panel, and the controller may control the LCD panel so that time for a data scan with respect to the LCD panel can correspond to the margin period.

The backlight unit may include a carbon nano-tube (CNT).

The backlight unit may include an organic light emitting diode (OLED).

The scan of the left-eye image and the scan of the right-eye image may be data scans.

The scan of the left-eye image and the scan of the right-eye image may be backlight scans.

A scanning time for the backlight unit may be shorter than a scanning time for the display unit.

An image displayed on the screen may be displayed by scanning and displaying a partial area of the screen sequentially in a scanning direction.

The display apparatus may include a liquid crystal display (LCD) panel, and the controller controls the LCD panel so that time for a data scan with respect to the LCD panel can correspond to the margin period.

The backlight scanning time of the display apparatus may be shorter than the data swanning time.

A backlight scan may be achieved by a backlight unit employing a carbon nano tube (CNT).

A backlight scan may be achieved by a backlight unit employing an organic light emitting diode (OLED).

The scan of the left-eye image and the scan of the right-eye image may be data scans.

The scan of the left-eye image and the scan of the right-eye image may be backlight scans.

The above and/or other exemplary aspects will become apparent and more readily appreciated from the following description of exemplary embodiments, taken in conjunction with the accompanying drawings, in which:
FIG. 1 is a view illustrating a response time of shutter-type 3D glasses using a liquid crystal;
FIG. 2 is a view illustrating a configuration of a display apparatus according to an exemplary embodiment;
FIG. 3 is a view for explaining an exemplary operation of a display apparatus in FIG. 2;
FIG. 4 is a view for explaining another exemplary operation of a display apparatus in FIG. 2;
FIG. 5 is a view for explaining still another exemplary operation of a display apparatus in FIG. 2;
FIG. 6 is a view illustrating a configuration of a display apparatus according to another exemplary embodiment;
FIG. 7 is a view for explaining an exemplary operation of a display apparatus in FIG. 6;
FIG. 8 is a flowchart showing operation of a display apparatus according to an exemplary embodiment; and
FIG. 9 is a flowchart showing operation of a display apparatus according to another exemplary embodiment.

Below, exemplary embodiments will be described in detail with reference to accompanying drawings so as to be easily realized by a person having ordinary knowledge in the art. The present invention may be embodied in various forms without being limited to the embodiments set forth herein. Descriptions of well-known parts are omitted for clarity, and like reference numerals refer to like elements throughout.

FIG. 1 is a view illustrating a response time of shutter-type 3D glasses using a liquid crystal;

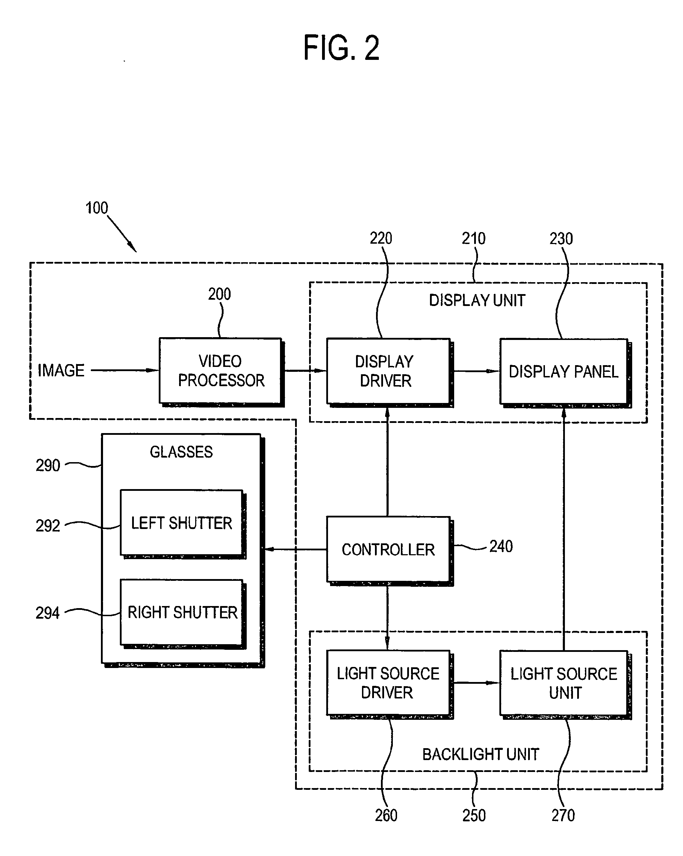

FIG. 2 is a view illustrating a configuration of a display apparatus according to an exemplary embodiment. As shown in FIG. 2, a display apparatus 100 in this exemplary embodiment includes a video processor 200, a display unit 210, a backlight unit 250, and a controller 240. The display unit 210 may include a display driver 220 and a display panel 230. The backlight unit 250 may include a light source driver 260 and a light source unit 270.

The video processor 200 processes an input 3D image containing a left-eye image and a right-eye image to be displayed on the display panel 230, and the display driver 220 drives the display panel 230 to display the 3D image processed by the video processor 200. The light source unit 270 of the backlight unit 250 emits light to the display panel 230, and the light source driver 260 drives the light source unit 270. The controller 240 controls the display driver 220 and the light source driver 260 to control a data scanning time and a backlight scanning time, and controls a left shutter 292 and a right shutter 294 of glasses 290 to be driven in sync with the left-eye image and the right-eye image displayed on the display panel 230. The 3D image displayed on the display apparatus 100 in this embodiment can be seen through the glasses 290, in which the glasses 290 comprise a shutter-type 3D glasses employing a liquid crystal, and include the left shutter 292 and the right shutter 294 which are opened and closed in sync with the left-eye image and the right-eye image displayed on the display panel 230.

The backlight unit 250 of the display apparatus 100 in this embodiment performs an impulsive operation. That is, if the input 3D image is processed in the video processor 200 and then the display driver 220 drives the display panel 230 to scan data, the light source unit 270 emits light according to partial areas of the display panel 230 so that the 3D image can be sequentially displayed on the display panel 230. The light source unit 270 is not being turned on as a whole, but a part thereof is being turned on and another part is being turned off. To drive the backlight unit 250 in this manner, the light source unit 270 may include a light emitting diode (LED), a carbon nano tube (CNT), an organic light emitting diode (OLED), or other light source as would be understood by one of skill in the art. The light source driver 260 is configured according to partial areas, and includes a plurality of multi-drivers so that each area can operate independently. If the backlight unit 250 performs the impulsive operation, an afterimage is prevented thereby providing an image improved in quality.

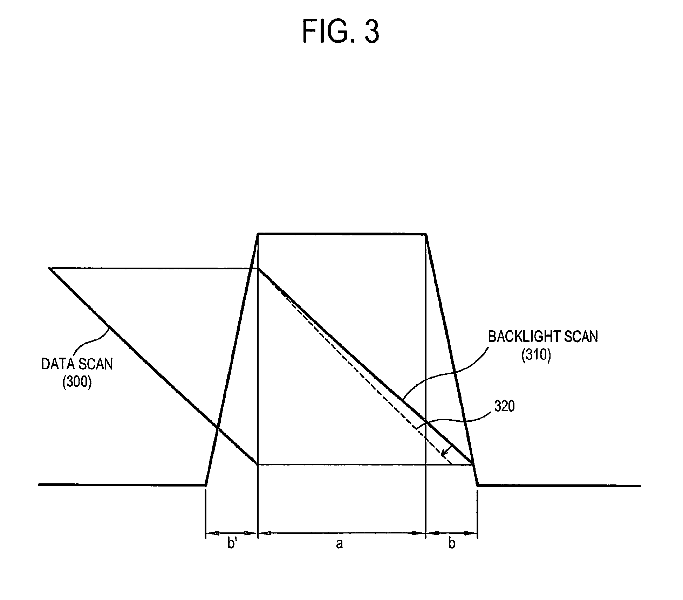

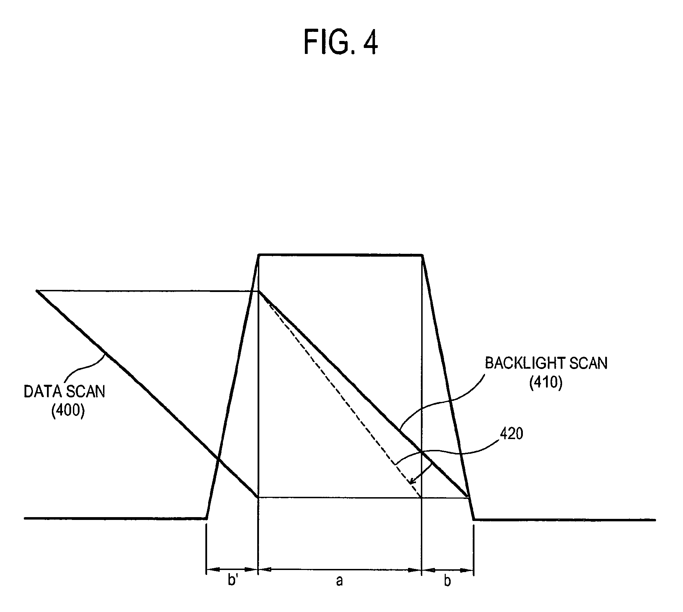

FIG. 3 is a view for explaining an exemplary operation of a display apparatus in FIG. 2. If the display apparatus 100 is driven at 120 Hz, one of plural frames constituting the input 3D image is displayed for 8.3 ms. Thus, the data scanning time for displaying one frame is 8.3 ms involving a discontinuing time in transmission, which is called a vertical blanking interval (VBI). When a data scan is completed, a backlight scan is performed, so that a user can see the 3D image displayed on the display panel 230 through the glasses 290. At this time, a user can see the 3D image displayed on the display panel 230 even in an incomplete opening section b, b' where the left shutter 292 and the right shutter 294 are shifted. In the incomplete opening section b, b', the brightness of the 3D image is lowered. As the time for allowing a user to see the 3D image displayed on the display panel 230 on the incomplete opening section b, b' becomes shorter, a user can see a clearer displayed image. Thus, in the display apparatus 100 according to this embodiment, the controller 240 controls the light source driver 260 to shorten the time of backlight scan 310, 320 in order to shorten the time during which a user can see the 3D image in the incomplete opening section b, b'. As shown in FIG. 3, the display apparatus 100 in this embodiment finishes the backlight scan 310, 320 in the incomplete opening section b by shortens the backlight scanning time 310, 320 without changing the time of data scan 300. In FIG. 3, the solid line indicates the backlight scan 310 before shortening the scanning time, and the dotted line indicates the backlight scan 320 after shortening the scanning time. To this end, the controller 240 controls the light source driver 260 so that the backlight scan 310, 320 can begin in a completely opened state of the left shutter 292 or the right shutter 294 of the glasses 290 and finish in the incomplete opening section b. For example, the data scan 300 for one of the plural frames constituting the 3D image is achieved for 8.3 ms while being driven at 120 Hz. On the other hand, the backlight scan 320 is scanned for a time shorter than 7.3 ms taken from the complete opening section a to the incomplete opening section b since the incomplete opening section is about 1 ms. Here, the backlight scan 320 for one frame involved in the 3D image begins in the complete opening section a. Further, the incomplete opening section b' of before the complete opening section a starts is excluded since it corresponds to a section where a different frame is displayed earlier than the currently displayed frame. That is, the display apparatus 100 in this embodiment alternately displays the left-eye image and the right-eye image. Because the currently displayed frame starts undergoing the backlight scan 320 in the complete opening section a, if the frames for the left-eye image are currently displayed, the incomplete opening section b' corresponds to a section where the frames for the right-eye image are displayed. In this case, a margin (interval) between a finishing point of the backlight scan for displaying the previously input frames and a beginning point of the backlight scan 320 for displaying the currently input frame, that is, between the backlight scanning sections for displaying the left-eye image and the right-eye image is generated in the incomplete opening section b where the left shutter 292 and the right shutter 294 of the glasses 290 are shifted between opened and closed states. The display apparatus 100 in this embodiment performs the backlight scan 320 in the incomplete opening section b, but the time for the backlight scan 320 is relatively short. To implement the backlight scan 320 in this manner, the controller 240 controls the light source driver 260 so that the backlight scan 320 can be performed more quickly as going from a top to a bottom of the display panel 230, thereby shortening the time for the backlight scan 320. FIG. 4 is a view for explaining another exemplary operation of a display apparatus in FIG. 2. As shown in FIG. 4, only the time for the backlight scan 410, 420 is shorted without changing the time for the data scan 400. In FIG. 4, the solid line indicates the backlight scan 410 before shortening the scanning time, and the dotted line indicates the backlight scan 320 after shortening the scanning time. Since the brightness of an image is lowered in the incomplete opening section b where the left shutter 292 and the right shutter 294 of the glasses 290 are shifted, the backlight scan 420 is prevented in the incomplete opening section b. To this end, the controller 240 controls the light source driver 260 so that the backlight scan 420 can be performed only in the complete opening section a. In this case, the backlight unit 250 is driven for 6.3 ms corresponding to the complete opening section a while being driven at 120 Hz. In the display apparatus 100 according to this embodiment, the backlight scanning time is more shortened than that of the case where the backlight scan is partially performed in the incomplete opening section b. Thus, the backlight scan 420 is implemented only in the complete opening section a more rapidly than the case where the backlight scan 420 is implemented in the incomplete opening section b as going from the top to the bottom of the display panel 230.

Like this, the display apparatus 100 in this embodiment performs the backlight scan 420 only in the complete opening section a, thereby preventing the brightness from lowering due to the backlight scan implemented in the incomplete opening section b and providing a clear 3D image. Further, a margin (interval) as much as the incomplete opening section b, i.e., as much as a section where the left shutter 292 and the right shutter 294 of the glasses 290 are shifted, is generated between the finishing point of the backlight scan 420 for displaying the previously input frames and the beginning point of the backlight scan for displaying the currently input frames.

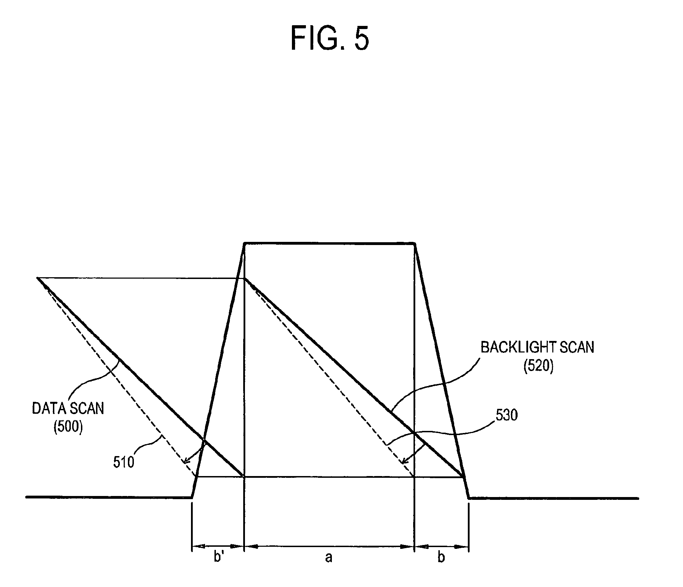

FIG. 5 is a view for explaining still another exemplary operation of a display apparatus in FIG. 2. As shown in FIG. 5, the display apparatus 100 in this embodiment shortens time for a backlight scan 520, 530 by shortening time for a data scan 500, 510. In FIG. 5, the solid line indicates the data scan 500 and the backlight scan 520 before shortening the scanning time, and the dotted line indicates the data scan 510 and the backlight scan 530 after shortening the scanning time. The controller 240 controls the light source driver 260 to implement the backlight scan 520, 530 leaving a certain time interval from a point of time when the data scan 500, 510 is generated so that the backlight scan 520, 530 corresponds to the data scan 500, 510. Thus, the time for the backlight scan 520, 530 can be shorted as the time for the data scan 500, 510 is shortened. For example, the controller 240 controls the display driver 220 to make the data scan 510 faster as going from the top to the bottom of the display panel 230, so that the backlight scan 530 can be partially performed in the incomplete opening section b or performed only in the complete opening section a. The light source driver 260 drives the light source unit 270 in accordance with the data scan 510, so that the time for the backlight scan 530 can be shortened as the time for the data scan 510 is shortened. Like this, the display apparatus 100 in this embodiment not only shortens the time for the backlight scan 530 but also prolongs a discontinuing time so called the VBI in the data transmission as the time for the data scan 510 is shortened. Accordingly, it is possible to sufficiently secure the response time of the glasses 290 in consideration of a response of a liquid crystal for the left shutter 292 and the right shutter 294 of the glasses 290, thereby providing a clear image.

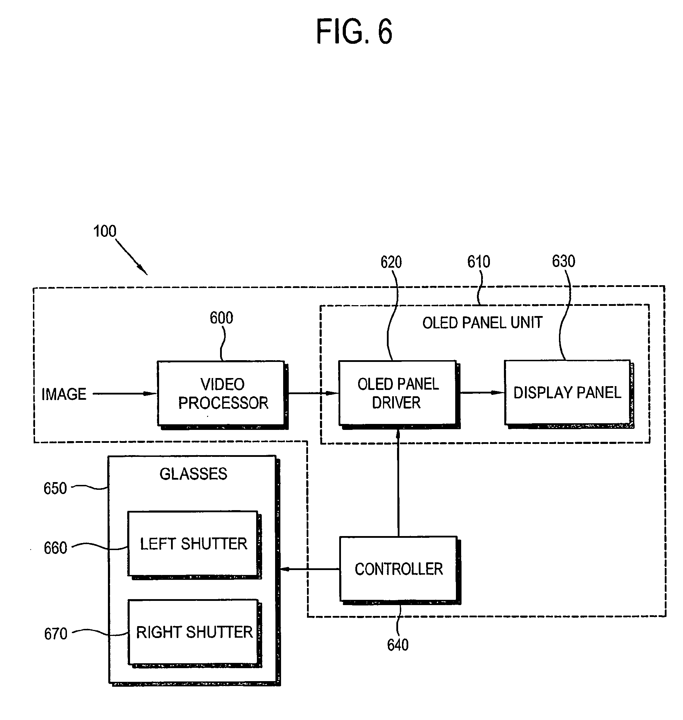

FIG. 6 is a view illustrating a configuration of a display apparatus according to another exemplary embodiment. As shown in FIG. 6, a display apparatus 100 in this embodiment includes a video processor 600, an OLED panel unit 610, and a controller 640. The OLED panel unit 610 may include an OLED panel driver 620 and a display panel 630. The video processor 600 processes an input 3D image involving a left-eye image and a right-eye image to be displayed on the display panel 630, and the OLED panel unit 610 drives the display panel 630 to display the 3D image processed by the video processor 600.

The controller 640 controls the OLED panel driver 620 to control the data scanning time, and controls the left shutter 660 and the right shutter 670 of the glasses 650 to be driven in sync with the left-eye image and the right-eye image displayed on the display panel 630.

The OLED refers to an organic material capable of emitting light by itself on the basis of an electroluminescent phenomenon that light is emitted when an electric current flows in an organic compound. Because such an OLED pixel emits light directly, an expressive range of light is greater than that of the LCD and there is no need of a backlight unit. Accordingly, it is possible to display the 3D image on the display panel 630 by implementing only the data scan with respect to the 3D image processed in the video processor 600, unlike a display apparatus using a general LCD panel.

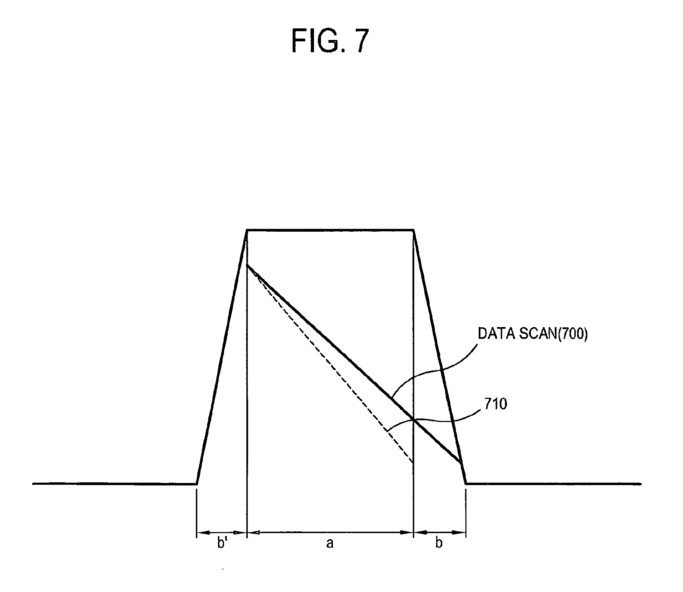

FIG. 7 is a view for explaining an exemplary operation of a display apparatus in FIG. 6. As shown in FIG. 7, the time for the data scan 700, 710 is shortened so as not to perform the data scan in the incomplete opening section b where the brightness of an image is lowered. Here, the solid line indicates the data scan 700 before shortening the scanning time, and the dotted line indicates the data scan 710 after shortening the scanning time. To this end, the controller 640 controls the OLED panel driver 620 to perform the data scan 710 only in the complete opening section a.

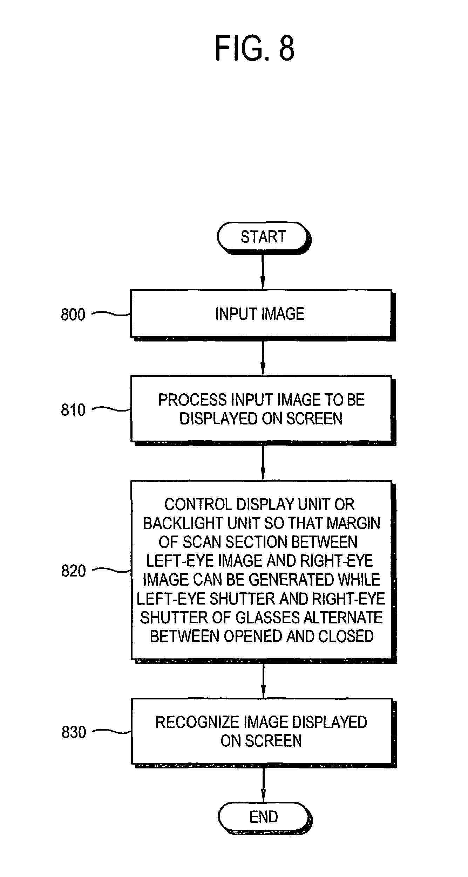

FIG. 8 is a flowchart showing operation of a display apparatus according to an exemplary embodiment. As shown in FIG. 8, when a 3D image involving a left-eye image and a right-eye image is input at operation 800, the video processor 200 processes the input image to be displayed on the display panel 230 at operation 810. Then, the left shutter 292 and the right shutter 294 are provided to be alternately opened and closed corresponding to the left-eye image and the right-eye image, and the controller 240 controls the display unit 210 or the backlight unit 250 so that a margin (interval) of a scan section between the left-eye image and the right-eye image can be generated while the left shutter 292 and the right shutter 294 of the glasses 290 for allowing a user to see the image displayed on the display panel 230 are shifted between the opened and closed states at operation 820. That is, the controller 240 controls the light source driver 260 to shorten the backlight scanning time or the display driver 220 to shorten the data scanning time, and also controls the light source driver 260 to make the backlight scan correspond to the data scan, thereby shortening the backlight scanning time. Then, if the display panel 230 displays an image, a user can see the displayed image through the glasses 290 at operation 830.

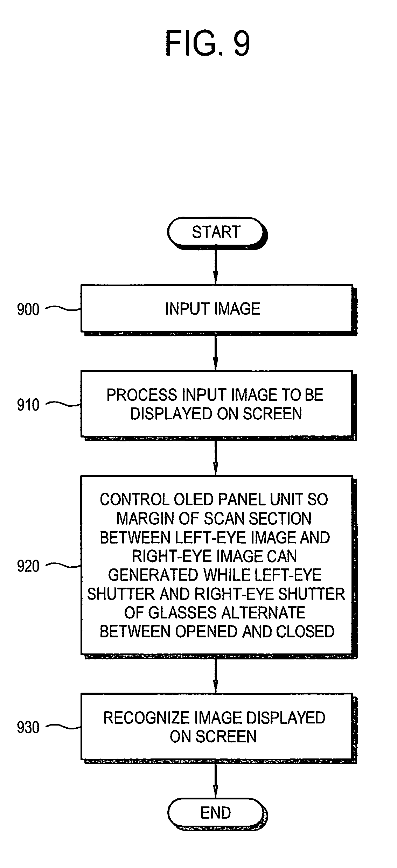

FIG. 9 is a flowchart showing operation of a display apparatus according to another exemplary embodiment. As shown in FIG. 9, when a 3D image involving a left-eye image and a right-eye image is input at operation 900, the video processor 600 processes the input image to be displayed on the display panel 630 at operation 910. Then, the left shutter 660 and the right shutter 670 are provided to be alternately opened and closed corresponding to the left-eye image and the right-eye image, and the controller 640 controls the OLED panel driver 620 so that a margin (interval) of a scan section between the left-eye image and the right-eye image can be generated while the left shutter 660 and the right shutter 670 of the glasses 650 for allowing a user to see the image displayed on the display panel 630 are shifted between the opened and closed states at operation 920. That is, the controller 640 controls the OLED panel driver 620 to shorten the data scanning time. Then, if the display panel 630 displays an image, a user can see the displayed image through the glasses 650 at operation 930.

As described above, the brightness of the 3D image is prevented from lowering to thereby provide a clear image.

Also, the data scanning time is shortened so that the response time of the 3D glasses can be sufficiently secured according to the response of the liquid crystal.

Although a few exemplary embodiments have been shown and described, it will be appreciated by those skilled in the art that changes may be made in these embodiments without departing from the principles of the invention, the scope of which is defined in the appended claims.

## Claims

1. A display apparatus using glasses (290) comprising a left shutter (292) and a right shutter (294) which are alternately opened and closed corresponding to a left-eye image and a right-eye image for displaying a 3D image, the display apparatus comprising:
a video processor (200) which processes an input video signal comprising a left-eye image and a right-eye image;
a display unit (210) which displays an image based on the video signal processed by the video processor; and
a controller (240;620) which controls the timing of a data scan (710) of the display unit emitting light directly or a backlight scan (530) of a backlight unit (250) which emits light to the display unit so that a margin period is generated between the respective scan of the left-eye image and the respective scan of the right-eye image,
wherein the margin period is equal in length to the period (b,b') during which the left shutter (292) and the right shutter (294) are shifted between the opened and closed states.

2. The display apparatus according to claim 1, wherein the margin period is generated by fixing a beginning point of the data scan or the backlight scan and advancing a finishing point of the respective scan.

3. The display apparatus according to claim 1, wherein the controller (240) controls the backlight unit (250) to sequentially scan a partial area of a screen of the display unit in a scanning direction.

4. The display apparatus according to claim 1, wherein the display unit (250) comprises a liquid crystal display (LCD) panel, and the controller controls the LCD panel so that a finishing time for a data scan (510) with respect to the LCD panel is equal to a beginning point of the margin period.

5. The display apparatus according to claim 1, wherein the backlight unit (250) comprises a carbon nano tube.

6. The display apparatus according to claim 1, wherein the backlight unit (250) comprises an organic light emitting diode.

7. The display apparatus according to claim 1, wherein a scanning time for the backlight scan (530) of a backlight unit (250) is shorter than a scanning time for a data scan of the display unit comprising a backlight unit.

8. A driving method of a display apparatus using glasses (290) comprising a left shutter (292) and a right shutter (294) which are alternately opened and closed corresponding to a left-eye image and a right-eye image for displaying a 3D image, comprising:
processing (810) an input video signal comprising a left-eye image and a right-eye image for a 3D image; and
controlling (820) a data scanning time (710) of a display unit emitting light directly or a backlight scanning time (530) such that a margin period is generated between scan of the left-eye image and the respective scan of the right-eye image,
wherein the margin period (b,b') is equal in length to the period (b,b') during which the left shutter and the right shutter are shifted between the opened and closed states.

9. The driving method according to claim 8, wherein the margin period is generated by fixing a beginning point of the data scan or the backlight scan and advancing a finishing point of the respective scan.

10. The driving method according to claim 8, further comprising displaying an image on a screen of the display unit (250) by scanning and displaying a partial area of the screen sequentially in a scanning direction.

11. The driving method according to claim 8, wherein the display apparatus comprises a liquid crystal display (LCD) panel, and the controller controls the LCD panel so that a finishing time for a data scan (510) with respect to the LCD panel is equal to a beginning point of the margin period.

## Patentansprüche

1. Anzeigevorrichtung unter Verwendung einer Brille (290), die einen linken Shutter (292) und einen rechten Shutter (294) umfasst, die korrespondierend mit einem Bild für das linke Auge und einem Bild für das rechte Auge abwechselnd geöffnet und geschlossen werden, zur Anzeige eines 3D-Bilds, die Anzeigevorrichtung umfassend:
einen Videoprozessor (200), der ein Eingangs-Videosignal, das ein Bild für das linke Auge und ein Bild für das rechte Auge umfasst, verarbeitet;
eine Anzeigeeinheit (210), die ein Bild basierend auf das von dem Videoprozessor verarbeitete Videosignal anzeigt; und
eine Steuerung (240; 620), die die Taktung eines Datenscans (710) der Anzeigeeinheit, die direkt Licht ausgibt, oder eines Hintergrundlichtscans (530) einer Hintergrundlichteinheit (250), die derart Licht zu der Anzeigeeinheit ausgibt, dass eine Randperiode zwischen dem jeweiligen Scan des Bilds für das linke Auge und dem jeweiligen Scan des Bilds für das rechte Auge erzeugt wird, steuert,
wobei die Randperiode in der Länge gleich der Periode (b, b') ist, während der der linke Shutter (292) und der rechte Shutter (294) zwischen den geöffneten und geschlossenen Zuständen verlagert werden.

2. Anzeigevorrichtung nach Anspruch 1, wobei die Randperiode durch Festsetzen eines Anfangspunkts des Datenscans oder des Hintergrundlichtscans und Vorrücken eines Abschlusspunkts des jeweiligen Scans erzeugt wird.

3. Anzeigevorrichtung nach Anspruch 1, wobei die Steuerung (240) die Hintergrundlichteinheit (250) steuert, um einen Teilbereich eines Bildschirms der Anzeigeeinheit in einer Scanrichtung sequenziell zu scannen.

4. Anzeigevorrichtung nach Anspruch 1, wobei die Anzeigeeinheit (250) eine Flüssigkristalldisplay-(LCD)-Tafel umfasst und die Steuerung die LCD-Tafel derart steuert, dass eine Abschlusszeit für einen Datenscan (510) in Bezug auf die LCD-Tafel gleich einem Anfangspunkt der Randperiode ist.

5. Anzeigevorrichtung nach Anspruch 1, wobei die Hintergrundlichteinheit (250) eine Kohlenstoff-Nanoröhre umfasst.

6. Anzeigevorrichtung nach Anspruch 1, wobei die Hintergrundlichteinheit (250) eine organische Leuchtdiode umfasst.

7. Anzeigevorrichtung nach Anspruch 1, wobei eine Scanzeit für den Hintergrundlichtscan (530) der Hintergrundlichteinheit (250) kürzer ist als eine Scanzeit für einen Datenscan der Anzeigeeinheit, die eine Hintergrundlichteinheit umfasst.

8. Ansteuerungsverfahren einer Anzeigevorrichtung unter Verwendung einer Brille (290), die einen linken Shutter (292) und einen rechten Shutter (294) umfasst, die korrespondierend mit einem Bild für das linke Auge und einem Bild für das rechte Auge abwechselnd geöffnet und geschlossen werden, zur Anzeige eines 3D-Bilds, umfassend:
Verarbeiten (810) eines Eingangs-Videosignals, das ein Bild für das linke Auge und ein Bild für das rechte Auge für ein 3D-Bild umfasst; und
Steuern (820) einer Datenscanzeit (710) einer Anzeigeeinheit, die direkt Licht ausgibt, oder einer Hintergrundlichtscanzeit (530) derart, dass eine Randperiode zwischen dem jeweiligen Scan des Bilds für das linke Auge und dem jeweiligen Scan des Bilds für das rechte Auge erzeugt wird,
wobei die Randperiode (b, b') in der Länge gleich der Periode (b, b') ist, während der der linke Shutter und der rechte Shutter zwischen den geöffneten und geschlossenen Zuständen verlagert werden.

9. Ansteuerungsverfahren nach Anspruch 8, wobei die Randperiode durch Festsetzen eines Anfangspunkts des Datenscans oder des Hintergrundlichtscans und Vorrücken eines Abschlusspunkts des jeweiligen Scans erzeugt wird.

10. Ansteuerungsverfahren nach Anspruch 8, weiter umfassend, ein Bild auf einem Bildschirm der Anzeigeeinheit (250) durch Scannen und Anzeigen eines Teilbereichs des Bildschirms sequenziell in einer Scanrichtung anzuzeigen.

11. Ansteuerungsverfahren nach Anspruch 8, wobei die Anzeigevorrichtung eine Flüssigkristalldisplay-(LCD)-Tafel umfasst und die Steuerung die LCD-Tafel derart steuert, dass eine Abschlusszeit für einen Datenscan (510) in Bezug auf die LCD-Tafel gleich einem Anfangspunkt der Randperiode ist.

## Revendications

1. Appareil d'affichage utilisant des lunettes (290) comprenant un obturateur gauche (292) et un obturateur droit (294) qui sont alternativement ouverts et fermés en correspondance avec une image d'oeil gauche et une image d'oeil droit pour afficher une image 3D, l'appareil d'affichage comprenant :
un processeur vidéo (200) qui traite un signal vidéo d'entrée comprenant une image d'oeil gauche et une image d'oeil droit ;
une unité d'affichage (210) qui affiche une image en fonction du signal vidéo traité par le processeur vidéo ; et
une unité de commande (240 ; 620) qui commande la synchronisation d'un balayage de données (710) de l'unité d'affichage émettant une lumière directement ou d'un balayage rétroéclairé (530) d'une unité de rétroéclairage (250) qui émet une lumière vers l'unité d'affichage de telle sorte qu'une période de marge soit générée entre le balayage respectif de l'image d'oeil gauche et le balayage respectif de l'image d'oeil droit,
dans lequel la période de marge est d'une longueur égale à la période (b, b') durant laquelle l'obturateur gauche (292) et l'obturateur droit (294) sont basculés entre les états ouvert et fermé.

2. Appareil d'affichage selon la revendication 1, dans lequel la période de marge est générée en fixant un point de début du balayage de données ou du balayage rétroéclairé et en avançant un point de fin du balayage respectif.

3. Appareil d'affichage selon la revendication 1, dans lequel l'unité de commande (240) commande l'unité de rétroéclairage (250) pour balayer séquentiellement une zone partielle d'un écran de l'unité d'affichage dans un sens de balayage.

4. Appareil d'affichage selon la revendication 1, dans lequel l'unité d'affichage (250) comprend un panneau d'affichage à cristaux liquides (LCD), et l'unité de commande commande le panneau LCD de telle sorte qu'un temps de fin d'un balayage de données (510) relativement au panneau LCD soit égal à un point de début de la période de marge.

5. Appareil d'affichage selon la revendication 1, dans lequel l'unité de rétroéclairage (250) comprend un nanotube de carbone.

6. Appareil d'affichage selon la revendication 1, dans lequel l'unité de rétroéclairage (250) comprend une diode électroluminescente organique.

7. Appareil d'affichage selon la revendication 1, dans lequel un temps de balayage du balayage rétroéclairé (530) d'une unité de rétroéclairage (250) est plus courte qu'un temps de balayage d'un balayage de données de l'unité d'affichage comprenant une unité de rétroéclairage.

8. Procédé de commande d'un appareil d'affichage utilisant des lunettes (290) comprenant un obturateur gauche (292) et un obturateur droit (294) qui sont alternativement ouverts et fermés en correspondance avec une image d'oeil gauche et une image d'oeil droit pour afficher une image 3D, comprenant :
le traitement (810) d'un signal vidéo d'entrée comprenant une image d'oeil gauche et une image d'oeil droit d'une image 3D ; et
la commande (820) d'un temps de balayage de données (710) d'une unité d'affichage émettant une lumière directement ou d'un temps de balayage rétroéclairé (530) de telle sorte qu'une période de marge soit générée entre le balayage respectif de l'image d'oeil gauche et le balayage respectif de l'image d'oeil droit,
dans lequel la période de marge (b, b') est d'une longueur égale à la période (b, b') durant laquelle l'obturateur gauche et l'obturateur droit sont basculés entre les états ouvert et fermé.

9. Procédé de commande selon la revendication 8, dans lequel la période de marge est générée en fixant un point de début du balayage de données ou du balayage rétroéclairé et en avançant un point de fin du balayage respectif.

10. Procédé de commande selon la revendication 8, comprenant en outre l'affichage d'une image sur un écran de l'unité d'affichage (250) en balayant et affichant séquentiellement une zone partielle de l'écran dans un sens de balayage.

11. Procédé de commande selon la revendication 8, dans lequel l'appareil d'affichage comprend un panneau d'affichage à cristaux liquides (LCD), et l'unité de commande commande le panneau LCD de telle sorte qu'un temps de fin d'un balayage de données (510) relativement au panneau LCD soit égal à un point de début de la période de marge.
